# EUROPÄISCHE PATENTSCHRIFT

(11) **EP 0 928 418 B1**
(45) Veröffentlichungstag und Bekanntmachung des Hinweises auf die Patenterteilung: **17.12.2003**
(21) Anmeldenummer: 97943908.0
(22) Anmeldetag: 26.09.1997
(51) Int. Cl.: G01N 30/00

(54) **VERFAHREN UND VORRICHTUNG ZUR ISOELEKTRISCHEN TEILCHENTRENNUNG**
PROCESS AND DEVICE FOR ISOELECTRIC PARTICLE SEPARATION
PROCEDE ET DISPOSITIF POUR LA SEPARATION ISOELECTRIQUE DE PARTICULES

(30) Priorität: 28.09.1996 DE 19640076; 09.06.1997 DE 19724266
(43) Veröffentlichungstag der Anmeldung: 14.07.1999
(73) Patentinhaber: Fuhr, Günter, 13127 Berlin (DE)
(72) Erfinder: FUHR, Günter, D-13127 Berlin (DE); KORLACH, Jonas, D-10178 Berlin (DE); EHWALD, Rudolf, D-10115 Berlin (DE)
(74) Vertreter: Hertz, Oliver, Dr.
(86) Internationale Anmeldenummer: EP9705295
(87) Internationale Veröffentlichungsnummer: WO98013689

(56) Entgegenhaltungen:
- WO-A-94/00215
- US-A- 2 555 487
- US-A- 5 133 844
- US-A- 5 160 625
- CHMELIK J ET AL: "SEPARATION OF TWO COMPONENTS OF HORSE MYOGLOBIN BY ISOELECTRIC FOCUSING FIELD-FLOW FRACTIONATION" ANALYTICAL CHEMISTRY, Bd. 61, Nr. 8, 15.April 1989, Seiten 912-914, XP000115300
- CHMELIK J: "ISOELECTRIC FOCUSING FIELD-FLOW FRACTIONATION EXPERIMENTAL STUDY OF THE GENERATION OF PH GRADIENTA" JOURNAL OF CHROMATOGRAPHY, Bd. 539, Nr. 1, 8.Februar 1991, Seiten 111-121, XP000173656
- CHMELIK J: "ISOELECTRIC FOCUSING FIELD-FLOW FRACTIONATION II. EXPERIMENTAL STUDY OF FOCUSING OF METHYL RED IN THE TRAPEZOIDAL CROSS-SECTION CHANNEL" JOURNAL OF CHROMATOGRAPHY, Bd. 545, Nr. 2, 7.Juni 1991, Seiten 349-358, XP000216695

## Beschreibung

Die Erfindung betrifft Verfahren und Vorrichtungen zur isoelektrischen Trennung von Teilchen, deren Ladungseigenschaften vom pH-Wert einer Führungsflüssigkeit abhängen, insbesondere zur Trennung ampholytischer suspendierter Teilchen, Kolloide oder biologischer Zellen. Die Erfindung betrifft insbesondere die Trennung derartiger Teilchen aus einer Führungsflüssigkeitsströmung.

Aus der Molekularbiologie, Biochemie, Medizin und Biotechnologie sind zahlreiche Trenntechniken bekannt, deren Funktion auf Ladungsunterschieden von Molekülen innerhalb einer zu trennenden Substanz beruht. Bei zwitterionischen Verbindungen (sogenannte Ampholyte oder ampholytische Moleküle) hängt die Molekülladung vom pH-Wert der Umgebungslösung ab. Der isoelektrische Punkt (im folgenden: IP) einer Verbindung ist der pH-Wert, bei dem die Nettoladung der amphoterischen Moleküle gleich null ist. Die Ladung des Moleküls ist bei einem pH-Wert kleiner als dem IP positiv bzw. im entgegengesetzten Fall negativ.

Bei der isoelektrischen Fokussierung (im folgenden IEF) werden Proteine mit unterschiedlichen IP's unter Verwendung räumlicher pH-Gradienten entlang einer Trennstrecke getrennt (s. R. A. M. Osher et al. in "The Dynamics of Electrophoresis" (Hrsg. B. J. Radola VCH, Weinheim, 1992, S. 163-231)). Die IEF wird beispielsweise unter Verwendung poröser Gelmatrizen oder für analytische Trennungen geringster Probenmengen unter Verwendung dünner Kapillaren als sogenannte cIEF (s. F. Foret et al. "Capillary Electrophoresis", in "Advances in Electrophoresis", Band III (Hrsg. A. Chrambach et al. VCH, Weinheim, 273-347)) ausgeführt.

Die herkömmliche IEF ist aus den folgenden Gründen nachteilig und in der Anwendbarkeit beschränkt. Die Rückgewinnung der getrennten Substanzen aus einem Trägermaterial, insbesondere für weitere Bearbeitungsschritte wie weitere Analysen, Medikamentanwendungen oder dergl., erfordert aufwendige Prozeduren, durch die gegebenenfalls die getrennten Substanzen selbst modifiziert werden oder die zu Substanzverlusten führen. Der notwendige Einsatz von Zusatzstoffen zur Bildung eines möglichst breit und linear geformten pH-Gradienten führt zu Beschränkungen in Bezug auf die weitere Verwendbarkeit der aufgetrennten Proben. Die als Zusatzstoffe eingesetzten, sogenannten Carrier-Ampholyte sind eine chemisch sehr diverse Substanzmischung, die schwer von den getrennten Protein-fraktionen trennbar ist. Die cIEF ist darüber hinaus auf geringste Probenmengen beschränkt, die nicht gesondert aufgefangen werden können und nicht von den Carrier-Ampholyten trennbar sind.

Speziell beim Einsatz von sogenannten IPG-Membranen zur Bildung des pH-Gradienten besteht das Problem darin, daß Proteine beim notwendigen Durchtritt durch eine solche Membran ein Milieu passieren müssen, dessen Ionenstärke sehr gering ist. Daher können empfindliche Proteine in diesem Bereich denaturieren oder ausfallen. Aus diesem Grunde werden bei der IEF an die Gleichmäßigkeit der Spannungsgradienten in der Trennstrecke höchste Anforderungen gestellt. Schließlich können bei der IEF Probleme in Form elektroosmotischer Erscheinungen in extremen pH-Bereichen auftreten, wobei sich beispielsweise das Trägermittel (Gel) stark aufheizt und verändert (Zerstörung des Gels).

Zur Überwindung der genannten Nachteile wurden Systeme entwickelt, bei denen eine Ampholytentrennung unter Wirkung eines äußeren elektrischen Feldes unter Ausschluß modifizierender Zusatzstoffe erzielt wird. Es ist beispielsweise ein Trennsystem bekannt, das nach der Methode der sogenannten elektrischen Feld-Fluß-Fraktionierung (eFFF) arbeitet (s. K.D. Caldwell et al. in "Science", Band 176, 1972, S. 296-298). Bei diesem Trennsystem wird durch einen schmalen Kanal zwischen zwei ionenstromdurchlässigen Membranen ein kontinuierlicher Flüssigkeitsstrom geführt, in den die zu trennende Probe als schmale Bande eingespritzt wird. Äußere Elektroden, die über eine Umgebungsflüssigkeit mit dem Kanal in elektrischem Kontakt stehen, bewirken eine ladungsabhängig verschieden starke Retardierung der Proteinmoleküle im Flüssigkeitsstrom. Die Anwendung dieses Verfahrens ist jedoch auf Proteinmoleküle mit relativ weit auseinander liegenden IP's beschränkt. Außerdem konnte keine vollständige Proteintrennung erzielt werden. Eine Steuerung des pH-Werts des Flüssigkeitsstroms (und somit des Molekülladungszustands) erfolgt bei diesem bekannten Trennsystem nicht.

Das eFFF-System ist in der Praxis nicht anwendbar. Die Proben konnten zwar (unvollständig) getrennt werden. Jedoch wurde ein Auffangen der getrennten Fraktionen nicht realisiert. Außerdem treten inakzeptable hohe Trennzeiten auf. So lieferte eine Weiterentwicklung des oben erwähnten eFFF-Systems (L.F. Kesner et al. in "Analytical Chemistry", Band 48, 1976, S. 1834-1839) selbst im Labormaßstab Analyse- oder Trennzeiten im Bereich mehrerer Stunden.

Ein von Lightfoot et al. ("Separation Science and Technology", Band 16, 1981, S. 619-656) beschriebenes, abgewandeltes eFFF-System verwendet eine zylindrische Kanalgeometrie. Dieses System zeigte ebenfalls für die Praxis inakzeptable Trennleistungen. Ferner ergab sich eine komplexe Abhängigkeit der Proteinretardierung von einer Vielzahl von Parametern, wie z. B. den verwendeten Pufferionen, der Probenmenge, der Proteinsorte und Eigenschaften der Kanalwand. Ferner ist auch dieses bekannte System nicht für eine pH-Steuerung oder etwa zur Trennung von Proteinen mit unterschiedlichen IP's vorgesehen.

Es besteht ein starkes Interesse an der Substanztrennung zur Herstellung hochreiner Substanzen über die Labordimension hinaus im industriellen Maßstab. Wegen der genannten Beschränkungen und Nachteile ist jedoch mit den genannten Systemen bislang keine kontinuierliche Substanztrennung mit einer für die Praxis ausreichenden Trennleistung und Trenngeschwindigkeit bekannt.

Aufgabe der Erfindung ist es, verbesserte Verfahren zur isoelektrischen Teilchentrennung anzugeben, die sich insbesondere durch eine erhöhte Trenngeschwindigkeit, eine erhöhte Zuverlässigkeit und einen erweiterten Einsatzbereich in Bezug auf die trennbaren Teilchen und die eingesetzten Umgebungslösungsmittel auszeichnet. Aufgabe der Erfindung ist es ferner, entsprechende kontinuierliche isoelektrische Reinigungsverfahren anzugeben. Die Aufgabe der Erfindung besteht auch darin, Vorrichtungen zur Implementierung der Verfahren zur Teilchentrennung und weitere Anwendungsmöglichkeiten anzugeben.

Die genannten Aufgaben werden durch Verfahren mit den Merkmalen entsprechend Patentanspruch 1 bzw. mit Vorrichtungen mit den Merkmalen entsprechend Patentanspruch 12 gelöst. Vorteilhafte Ausführungsformen der Erfindung ergeben sich aus den abhängigen Ansprüchen.

Die erfindungsgemäße Trenntechnik basiert auf der Idee, in einer Führungsflüssigkeit, in der die zu trennenden Teilchen elektrischen Feldkräften ausgesetzt sind, eine pH-Wertsteuerung oder -einstellung vorzunehmen, so daß alle Teilchenarten mit einer Nettoladung eine ladungsabhängige Bewegung ausführen und die übrigen, im wesentlichen neutralen Teilchen keine Änderung ihres Bewegungszustandes erfahren, wobei die ladungsabhängig bewegten Teilchen zu Auffangmitteln (Auffangeinrichtung) bewegt werden. An den Auffangmitteln werden die Teilchen zumindest zeitweilig festgehalten. Das Festhalten umfaßt ein Fixieren auf der Oberfläche oder im Volumen der Auffangmittel. Die Dauer der Fixierung wird durch die Trennbedingungen, insbesondere eine zeitliche Modulation der elektrischen Feldkräfte, einer Veränderung des pH-Wertes, der Struktur der Auffangmittel und/oder einer relativen Bewegung zwischen den Auffangmitteln und der Führungsflüssigkeit bestimmt.

Ein wesentlicher Unterschied gegenüber der oben beschriebenen eFFF-Technik besteht somit darin, daß die Teilchen nicht ladungsabhängig verschieden retardiert werden, sondern daß durch die pH-Wertsteuerung in der Führungsflüssigkeit eine Bedingung eingestellt wird, mit der festgelegt wird, welche Teilchenart unter Wirkung eines äußeren elektrischen Feldes in einen zumindest zeitweilig fixierten Zustand bewegt und ggf. wieder freigegeben wird. Im Unterschied zur eFFF-Technik wird die erfindungsgemäße isoelektrische Trennung daher die pH-gesteuerte Elektroretentions-Chromatographie genannt. Die Auffangmittel wirken als echte Rückhaltemittel. Es wird somit ein Verfahren zur inversen isoelektrischen Teilchentrennung angegeben, bei dem Teilchen mit pH-Wert abhängiger Ladung in einer Führungsflüssigkeit an einem Auffangmittel vorbeigeführt werden und der pH-Wert der Führungsflüssigkeit so eingestellt bzw. modifiziert wird, daß nur die ungeladenen Teilchen in der Führungsflüssigkeit verbleiben, während die geladenen Teilchen durch ein elektrisches Feld gegen das Auffangmittel bewegt und somit zumindest temporär pH-abhängig fixiert werden.

Die erf indungsgemäß induzierte Bewegungsänderung der vorbestimmten Teilchenart ist so auf die Auffangmittel gerichtet, daß sich die vorbestimmte, zu trennende Teilchenart an oder hinter den Auffangmitteln anordnet oder sammelt. Die Auffangmittel werden beispielsweise durch eine Auffanganordnung gebildet, die zwischen Elektrodenmitteln zur Erzeugung des äußeren elektrischen Feldes und der Führungsflüssigkeit angeordnet ist. Es ist möglich, das Auffangmittel in Bezug auf die Führungsflüssigkeit zu bewegen.

Die Auffanganordnung ist vorzugsweise substanzabhängig teildurchlässig. Die Teildurchlässigkeit kann zum Beispiel bedeuten, daß die Auffanganordnung für die Moleküle der Führungsflüssigkeit bzw. für in der Führungsflüssigkeit gelöste Ionen durchlässig, für die abzutrennende Substanz oder Teilchenart jedoch undurchlässig ist (Barrierewirkung). Es kann auch vorgesehen sein, daß die Teildurchlässigkeit so eingerichtet ist, daß ein Teil der abzutrennenden Teilchenart mit kleineren Teilchengrößen durchgelassen und der Rest der abzutrennenden Teilchen mit größeren Teilchengrößen nicht durchgelassen wird. Die Auffanganordnung stellt vorzugsweise eine Begrenzung der Führungsflüssigkeit mit den zu trennenden Teilchen dar. Außerhalb der Auffanganordnung sind in einer Umgebungslösung mit einstellbarem pH-Wert die Elektrodenmittel zur Bildung des elektrischen Feldes vorgesehen.

Die Erfindung kann mit einer ruhenden oder mit einer strömenden Führungsflüssigkeit realisiert werden. In beiden Fällen bildet die Auffanganordnung ein Kompartiment oder ein Gefäß, das mindestens eine Öffnung zur Zufuhr bzw. Abfuhr der zu trennenden Probe besitzt.

Die Trennwirkung ist besonders gut und schnell, wenn der Verschiebeweg der Teilchen vom Probenort in der (ggf. tangential zu den angrenzenden Auffangmitteln strömenden) Führungsflüssigkeit zu den Auffangmitteln möglichst klein gehalten wird. Die Auffanganordnung besitzt vorzugsweise charakteristische Dimensionen, die in Strömungsrichtung der Führungsflüssigkeit wesentlich größer als der Verschiebeweg sind. Der Verschiebeweg bzw. die Innenmaße der Kompartimente sind beispielsweise in der Größenordnung von mm oder geringer.

Gemäß einer bevorzugten Ausführungsform ist als Auffanganordnung mindestens ein längliches, hohles Element (z. B. rohrförmig) vorgesehen, das eine teildurchlässige oder poröse Wandung besitzt und von der Führungsflüssigkeit mit der zu trennenden Teilchenprobe durchströmt wird. Es sind jedoch auch Auffanganordnungen mit anderen Gestalten, insbesondere mit nicht-kreisrunden, sondern eckigen Querschnitten möglich. Gemäß einer besonders vorteilhaften und bevorzugten Ausführungsform besteht die Auffanganordnung aus mindestens einer geraden oder gekrümmten Hohlfaser mit einer zumindest in Teilbereichen teildurchlässigen Wandung.

Die erfindungsgemäße isoelektrische Trennung ist mit ampholytischen Molekülen oder allen anderen synthetischen oder biologischen Teilchen (insbesondere Zellen oder Viren) realisierbar, die entsprechende elektrische Eigenschaften wie ampholytische Moleküle, insbesondere eine pH-Abhängigkeit der Nettoladung oder der Ladungsdichte von der Umgebung, aufweisen.

Je nach Anwendungsfall kann das Ziel der erfindungsgemäßen isoelektrischen Trennung darauf gerichtet sein, die vorbestimmte Teilchenart, die eine ladungsabhängige Bewegungsänderung im elektrischen Feld erfährt, oder die restlichen Teilchen ohne Änderung des Bewegungszustandes zu gewinnen.

Eine erfindungsgemäße Vorrichtung zur isoelektrischen Teilchentrennung enthält Elektrodenmittel zur Bildung eines elektrischen Feldes in einer Führungsflüssigkeit mit den zu trennenden Teilchen und pH-Einstellmittel, die zur Steuerung oder Einstellung des pH-Werts in der Führungsflüssigkeit eingerichtet sind. Es sind ferner Auffangmittel zwischen den Elektrodenmitteln und der Führungsflüssigkeit vorgesehen, die neben einer Sammlungsfunktion für eine abzutrennende Teilchenart eine Abgrenzungsfunktion gegenüber einer Umgebungslösung mit einstellbarem pH-Wert besitzt. Die Auffangmittel sind mindestens für Ionen, die in der Umgebungslösung und der Führungsflüssigkeit gelöst sind, durchlässig, so daß durch Einstellung des pH-Wertes der Umgebungslösung auch der pH-Wert der Führungsflüssigkeit einstellbar oder steuerbar ist.

Bevorzugte Anwendungsformen der Erfindung sind alle Trennvorgänge an Probengemischen, die mindestens eine Teilchenart mit ampholytischen Eigenschaften enthalten, und/oder Untersuchungen von bestimmten Substanzen zur Ermittlung des isoelektrischen Punktes, von Titrationskurven oder des Aggregationsverhaltens. Die erfindungsgemäße Vorrichtung ist auch zur Verringerung der Ionenstärke der Führungsflüssigkeit im Bereich der pH-gesteuerten Elektrodialyse einsetzbar.

Die erfindungsgemäße isoelektrische Teilchentrennung besitzt die folgenden Vorteile.

Die Fraktionierung oder Trennung erfolgt ohne Zusatzsubstanzen, insbesondere ohne Carrier-Ampholyte oder andere Mittel, etwa zur Erzeuung eines pH-Gradienten. Da kein pH-Gradient erzeugt wird, ergibt sich eine wesentliche Erleichterung einer präparativen Verfahrensweise im Durchflußsystem bzw. eine erleichterte Sammlung der gewünschten (ggf. aller) getrennten Fraktionen. Die getrennten oder gereinigten Fraktionen stehen nach der Trennung für weitere Manipulationen zur Verfügung, ohne gegenüber der ursprünglichen Form verändert zu sein. Die getrennten Fraktionen befinden sich insbesondere immer in demselben Lösungsmittel mit gleicher, ggf. geringfügig verringerter oder sogar höherer Konzentration. Das erfindungsgemäße System ist sowohl für die diskontinuierliche als auch für die kontinuierliche Trennung von Teilchen in Abhängigkeit von deren IP's einsetzbar und automatisierbar. Es sind sowohl räumliche als auch durch Variation des pH-Wertes während des Trennvorgangs zeitliche Fraktionierungen möglich. Es ergibt sich eine hohe Trenngeschwindigkeit im Bereich von Minuten, wie es im einzelnen unten beispielhaft angegeben wird. Das Trennsystem ermöglicht eine Anordnung der Elektrodenmittel auf engstem Raum, so daß im Vergleich zu herkömmlichen Trennverfahren mit verhältnismäßig geringen Spannungen genügend große Feldstärken erzielbar sind. Damit wird der Energieverbrauch erfindungsgemäßer Systeme minimiert und eine Schonung temperaturempfindlicher Proben erzielt.

Weitere Merkmale und Vorteile der Erfindung werden aus der folgenden Beschreibung von Ausführungsformen unter Bezug auf die beigefügten Zeichnungen ersichtlich. Es zeigen:
- Fig. 1:: eine Prinzipdarstellung zur Erläuterung der bei der erfindungsgemäßen Trennung auftretenden Kräfte;
- Fig. 2:: eine Kurvendarstellung zur Illustration einer erfindungsgemäßen Proteintrennung;
- Fig. 3:: eine Kurvendarstellung zur Illustration einer weiteren erfindungsgemäßen Proteintrennung;
- Fig. 4:: eine Kurvendarstellung einer Modellrechnung zur Illustration der erfindungsgemäß erzielbaren Trennschärfe;
- Fig. 5:: eine Kurvendarstellung zur Illustration einer weiteren erfindungsgemäßen Proteintrennung;
- Fig. 6:: eine schematische Darstellung einer erfindungsgemäßen Trennvorrichtung;
- Fign. 7,: 8 und 9: schematische Darstellungen zu modifizierten Hohlfaseranordnungen;
- Fig. 10: eine schematische Darstellung einer kombinierten Trenn- und Konzentrierungsvorrichtung;
- Fig. 11:: eine schematische Darstellung eines erfindungsgemäßen Multikompartimentsystems; und
- Fig. 12:: eine schematische Darstellung einer modifizierten Ausführungsform einer erfindungsgemäßen Trennvorrichtung.

Bei der folgenden Erläuterung wird beispielhaft auf eine Realisierung der Erfindung Bezug genommen, bei der die Auffangmittel durch eine Hohlfaser gebildet werden. Die erläuterten Prinzipien sind jedoch in gleicher Weise auch bei anderen geometrischen Formen der Auffangmittel realisierbar. Ferner ist die Erfindung nicht auf die beispielhaft erwähnte Proteintrennung beschränkt, sondern mit beliebigen Teilchen oder Partikeln mit ampholytischen Eigenschaften implementierbar.

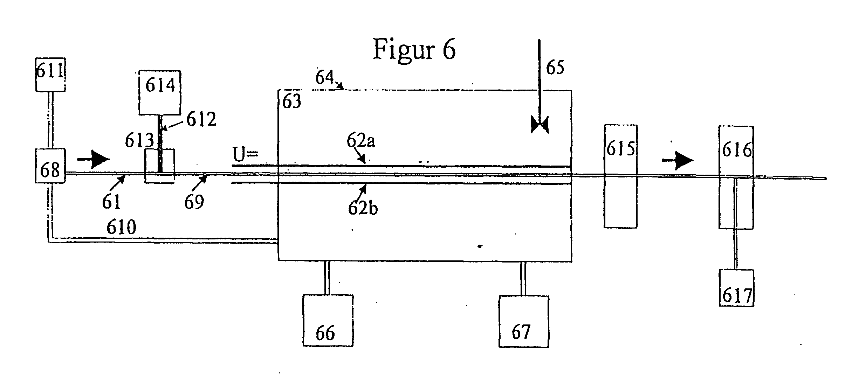

Entsprechend einer Ausführungsform der Erfindung (Einzelheiten siehe unten, Figur 6) wird ein Reaktionsraum, der die Umgebungslösung, mindestens zwei Elektroden und pH-Einstellmittel enthält, von einer dünnen Hohlfaser durchsetzt. Die Elektroden sind dazu eingerichtet, mit einer vorbestimmten Gleichspannung beaufschlagt zu werden. Die Wandung der Hohlfaser ist zur Bildung der Teildurchlässigkeit mit einer Vielzahl von Poren definierter Größe versehen. Die Porengröße ist derart gewählt, daß das Lösungsmittel (zum Beispiel Wasser) und den elektrischen Strom transportierende Ionen durchgelassen werden, jedoch die zu trennenden Moleküle nicht durch die Wandung hindurchtreten können. Die Hohlfaser kann beispielsweise einen Innendurchmesser (oder lichte Weite oder sogenanntes Lumen) im Bereich von Millimeter bis Mikrometer besitzen. Die pH-Einstellmittel sind dazu vorgesehen, den pH-Wert der Umgebungslösung mit einem an sich bekannten, herkömmlichen Verfahren, z. B. elektrisch oder titratorisch, zu steuern oder einzustellen.

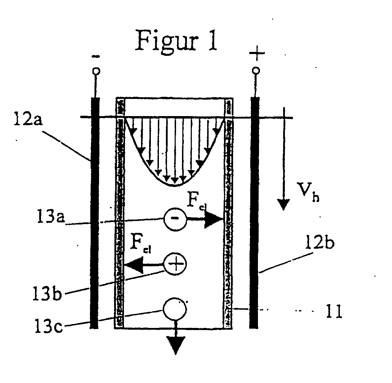

Die zu trennende Probe wird mit einer zweiten Flüssigkeit, der Führungsflüssigkeit, durch das Lumen der Hohlfaser geführt. Die Führungsflüssigkeit besitzt vorzugsweise denselben pH-Wert oder dieselbe Ionenzusammensetzung wie die Umgebungslösung. Hierzu kann die Führungsflüssigkeit beispielsweise dem Reaktionsraum entnommen werden. Es ist jedoch alternativ auch möglich, daß die Führungsflüssigkeit einen anderen pH-Wert besitzt. Am stromaufwärts gelegenen Ende der Hohlfaser sind Mittel zur Einführung der zu trennenden Probe in die Führungsflüssigkeit und am stromabwärts gelegenen Ende der Hohlfaser Detektor- und/oder Sammlermittel vorgesehen. Im folgenden werden die bei der erfindungsgemäßen Trennung auftretenden Kräfte unter Bezug auf Fig. 1 erläutert.

Fig. 1 zeigt in schematischer Schnittdarstellung einen Abschnitt einer Hohlfaser 11, die von der Führungsflüssigkeit mit einem bestimmten pH-Wert und der zu trennenden Probe 13a, 13b und 13c durchströmt wird. Die Hohlfaser 11 ist zwischen zwei Gleichspannungselektroden 12a, 12b angeordnet, so daß die Führungsflüssigkeit mit der Probe ein elektrisches Feld durchströmt.

Entsprechend dem pH-Wert der Führungsflüssigkeit umfaßt die Probe negativ geladene Moleküle 13a, positiv geladene Moleküle 13b und ungeladene Moleküle 13. Unter der Wirkung der elektrischen Feldkräfte werden die geladenen Moleküle an den Rand der Führungsflüssigkeit bewegt. Am Rand des Flüssigkeitsstromes, d. h. an der als Auffangmittel wirkenden Hohlfaser werden die geladenen Moleküle vom Weitertransport mit der Führungsflüssigkeit ausgeschlossen und somit örtlich fixiert. Die örtliche Fixierung kann generell mit einem genügend starken elektrischen Feld, das eine Komponente senkrecht zur Strömungsrichtung der Führungsflüssigkeit (vₕ) besitzt, und eine haftungsfördernde (z. B. rauhe oder poröse) Innenoberfläche der Hohlfaser erzielt werden. Gemäß einer bevorzugten Ausführungsform der Erfindung werden die Geometrie der Hohlfaser und die Strömungsgeschwindigkeit der Führungsflüssigkeit jedoch so ausgewählt, daß das in Fig. 1 illustrierte Strömungsprofil mit einer im wesentlichen parabelförmigen Gestalt gebildet wird. Ein solches Strömungsprofil ist dadurch gekennzeichnet, daß die Strömungsgeschwindigkeit in der Mitte der Führungsflüssigkeit, d. h. in der Mitte der Hohlfaser am größten ist und zum Rand hin abnimmt. Ein solches Strömungsprofil wird beispielsweise bei Erzeugung einer laminaren Führungsflüssigkeitsströmung durch die Hohlfaser erzielt. In unmittelbarer Nachbarschaft zur Wandung der Hohlfaser ist die Strömungsgeschwindigkeit gleich null. In diesem Fall werden die Moleküle vollständig vom Weitertransport im Führungsflüssigkeitsstrom ausgeschlossen (Elektroretention).

Ein Molekül, dessen IP mit dem in der Führungsflüssigkeit herrschenden pH-Wert übereinstimmt, besitzt keine elektrische Nettoladung und bleibt daher vom elektrischen Feld unbeeinflußt. Somit wird in Abhängigkeit vom pH-Wert eine bestimmte Molekülart durch die Hohlfaser zum Beispiel zu einem Detektor oder Sammler geführt, während die geladenen Teilchen an der Hohlfaserwandung zurückgehalten werden.

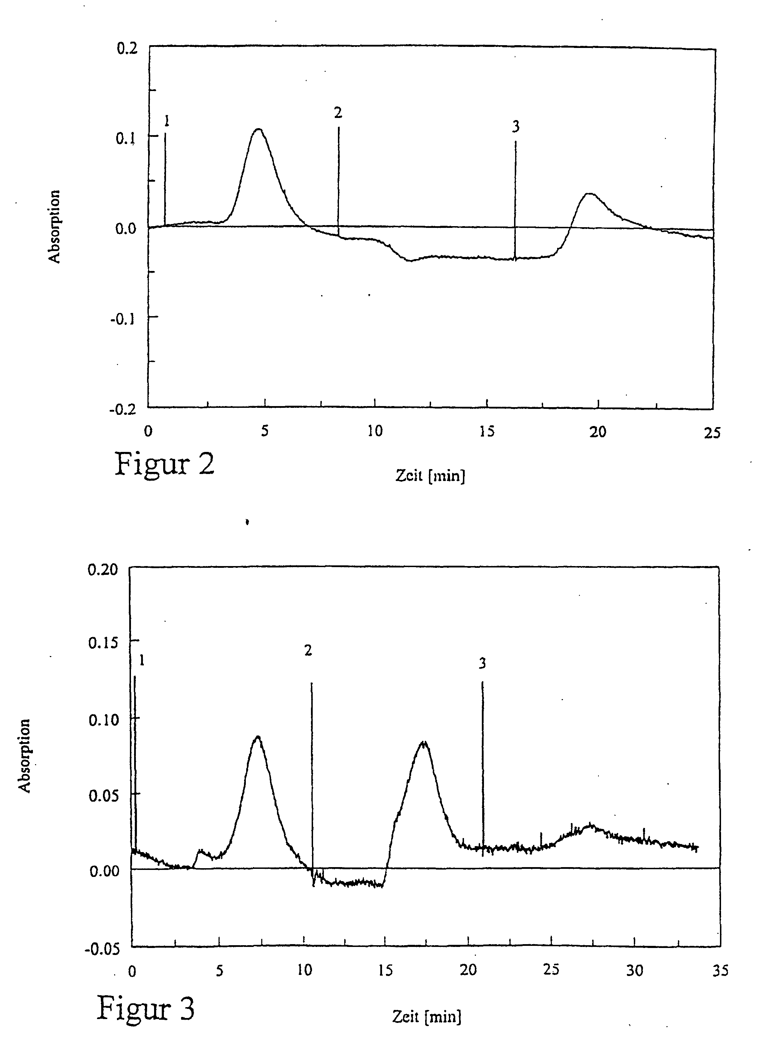

Die Fign. 2 und 3 zeigen experimentelle Ergebnise zur Proteintrennung. Die Kurvendarstellungen zeigen Absorptionswerte, die mit einem Detektor am stromabwärts gelegenen Ende der Hohlfaser in Abhängigkeit von der Zeit aufgenommen werden. In Fig. 2 wird bei Punkt 1 der Führungsflüssigkeit eine definierte Proteinmenge zugeführt und ohne elektrische Feldeinwirkung im Zeitverlauf (Maximum bei rd. 5 min) detektiert. Bei Punkt 2 wird erneut eine Proteinmenge der Führungsflüssigkeit zugeführt, jetzt aber mit einem elektrischen Feldeinfluß. Es zeigt sich keine (bzw. eine meßsystembedingt geringe negative) Absorptionsänderung, da das Protein zurückgehalten wird. Erst nach Abschalten des elektrischen Feldes (Punkt 3) wird das zurückgehaltene Protein dem Trägerst rom wieder zugeführt und somit detektiert (Maximum bei rd. 20 min).

Fig. 3 zeigt einen entsprechenden Versuch, wobei hier jedoch das Protein einen IP besitzt, der mit dem pH-Wert der Umgebungslösung bzw. der Führungsflüssigkeit übereinstimmt. Zwischen den Punkten 1 und 2 (ohne Feldeinfluß) bzw. 2 und 3 (mit Feldeinfluß) zeigt sich jetzt, daß das Protein wegen der fehlenden Nettoladung unbeeinflußt bleibt und unverändert den Detektor erreicht. Bei Abschalten des Feldes (Punkt 3) wird keine Absorption des Proteins detektiert, sondern nur noch Verunreinigungen, die in der Ausgangsprobe enthalten sind. Dies zeigt den Reinigungseffekt, der durch den Proteindurchlauf durch das elektrische Feld, in dessen Verlauf die Verunreinigungen aus der Probe gezogen wurden, erzielt wurde.

Neben der Abtrennung von Proteinen mit einem vom pH-Wert abweichenden IP gemäß Fig. 2 oder der Abtrennung von Verunreinigungen gemäß Fig. 3 sind folgende Varianten der erfindungsgemäßen Verfahrensweisen möglich.

Es ist möglich, den pH-Wert der Umgebungslösung und somit der Führungsflüssigkeit zeitlich zu verändern. Wird die zeitliche Variation auf die Hohlfaserlänge bzw. die Strömungsgeschwindigkeit der Führungsflüssigkeit abgestimmt, so kann bei kontinuierlicher Feldeinwirkung durch die Variation des pH-Wertes eine zeitlich versetzte Trennung von Komponenten aus der Probe in der Reihenfolge ihrer IP's erfolgen. Die kontrollierte, trägerfreie pH-Variation läßt sich über einen weiten Bereich mit einer Genauigkeit von rd. 0,1 bis zu 0,01 pH-Einheiten mit einem pH-Staten erzielen. Bei dieser zeitlichen Fraktionierung wird somit der pH-Wert in Abhängigkeit von der Zeit derart vergrößert oder verkleinert, daß der pH-Wert jeweils für die Dauer eines Zeitbereiches einem IP einer Komponente der Probe entspricht. Der Zeitbereich ist so gewählt, daß eine vollständige Trennung der jeweiligen Komponente aus der Probe erfolgen kann und eine räumliche Trennung der Auftragung auf der Innenwandung der Hohlfaser von der jeweils nächsten Komponente realisiert wird (Fraktionierung eines Substanzgemisches).

Neben der pH-Variation zur Ladungsvariation der Moleküle bzw. Teilchen ist es ferner möglich, anstelle der oben genannten Gleichspannung zwischen den Elektroden eine zeitliche und/oder räumliche Modulation des elektrischen Feldes vorzusehen. Im Ergebnis läßt sich wiederum die Trennung der Probe optimieren.

Eine weitere Alternative besteht in der Variation der hydrodynamischen Strömung durch die Hohlfaser (Variation der Strömungsgeschwindigkeit). So ist es möglich, die Führungsflüssigkeitsströmung zeitlich zu begrenzen oder anzuhalten, wenn sich die Probe im Hohlfaserelement unter Feldeinwirkung befindet.

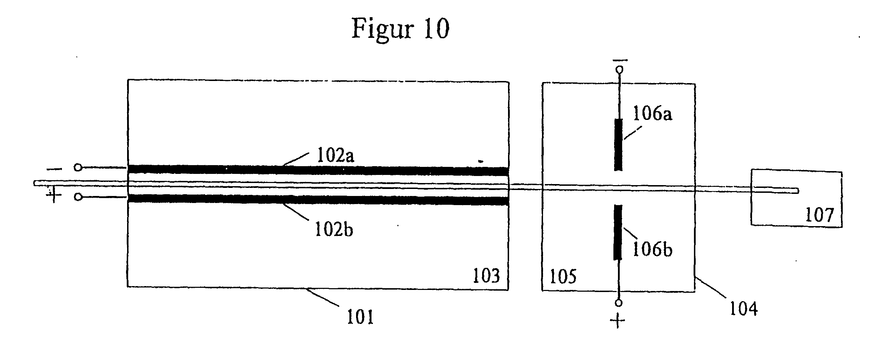

Eine Variation eines erfindungsgemäßen Trenn- oder Reinigungsverfahrens wird bei Ausbildung einer Teildurchlässigkeit der Hohlfaser (Wahl der Pcrengräße) derart ermöglicht, daß auch ein Durchtritt zumindest eines Teils der gelösten, voneinander zu trennenden Moleküle möglich ist. In der Umgebungslösung der Führungsflüssigkeit wird ein pH-Wert eingestellt, der dem IP der zu isolierenden Komponente entspricht. Nach Einspritzung der Probe als schmale Bande oder bei kontinuierlicher Probenzuführung werden alle Komponenten, deren IP nicht dem eingestellten pH-Wert entspricht, aus dem Hohlfaserlumen durch die Wandporen in die Umgebungslösung verschoben. Die in der Hohlfaser verbleibende, nun gereinigte. Komponente kann mit dem Führungsflüssigkeitsstrom hinter der Trennstrecke aufgefangen werden. Die Konzentration der gereinigten Komponente nimmt lediglich durch die Diffusion durch die Hohlfaserwand geringfügig ab, kann jedoch über eine nachgeschaltete Aufkonzentrierungseinheit (s. Fig. 10) wieder erhöht werden.

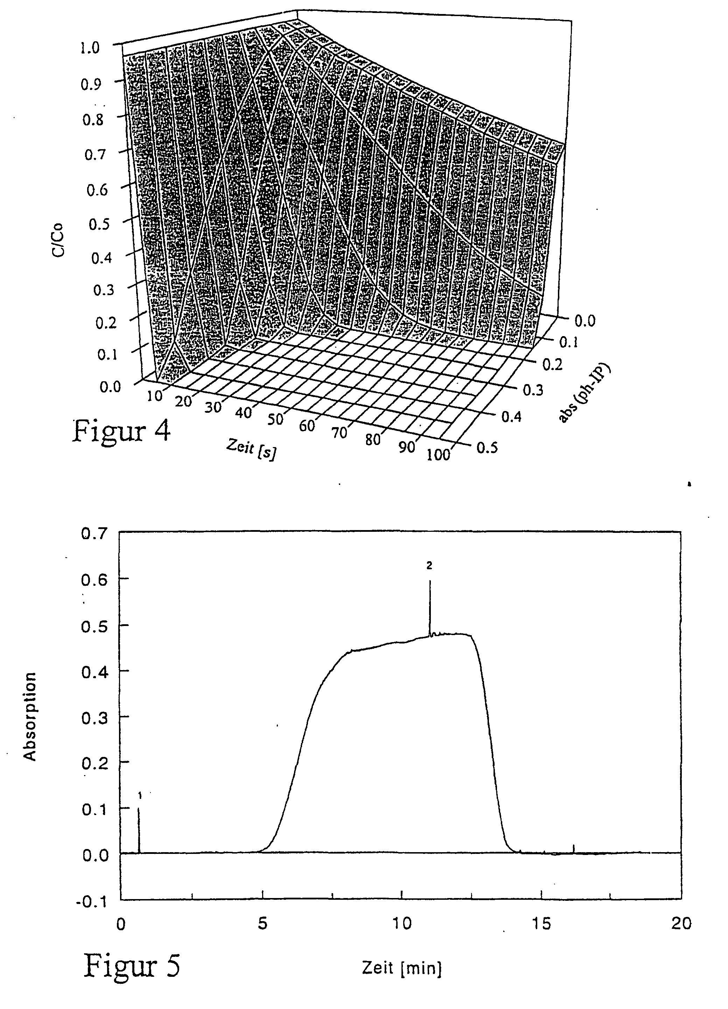

Fig. 4 zeigt das Ergebnis einer Modellrechnung zur Illustration der Wirkung des elektrischen Feldes auf Moleküle, deren IP nicht mit dem pH-Wert der Führungsflüssigkeit übereinstimmt. Parameter der graphischen Darstellung sind die Zeit, die relative Konzentrationsänderung c/c₀ und der Betrag oder die Absolutabweichung zwischen dem IP und dem pH-Wert (abs(pH-IP)). Es zeigt sich, daß bereits bei geringfügigen Abweichungen des IP vom pH-Wert die Konzentration der jeweiligen Komponente aufgrund der starken elektrischen Feldwirkung in kurzer Zeit auf null abnimmt.

Bei der kontinuierlichen Verfahrensweise wird die sich mit den abgetrennten Komponenten anreichernde Umgebungslösung simultan durch frische Umgebungslösung ersetzt.

Fig. 5 zeigt die experimentelle Bestätigung der hohen Trennungsgeschwindigkeit am Beispiel mit einer für die Komponenten durchlässigen Hohlfaser. Ein kontinuierlicher Probestrom wird durch die Hohlfaser geführt und.an deren stromabwärts gelegenen Ende noch ohne Feldeinfluß detektiert (Punkt 1 bis Punkt 2). Nach Anlegen des elektrischen Feldes (Punkt 2) wird das Protein mit einer geringen Ansprechzeit (Größenordnung: Minute) vollständig aus der Hohlfaser entfernt (Rückgang der Absorption), da der pH-Wert der Umgebungslösung nicht dem IP des Proteins entspricht.

Fig. 6 zeigt schematisch den Aufbau einer erfindungsgemäßen Trennvorrichtumg zur IP-abhängigen Trennung ampholytischer Moleküle. In einem Reaktionsraum 64 sind die Hohlfaser 61 und zwei Elektroden 62a, 62b angeordnet. Die Hohlfaser und die Elektroden verlaufen parallel zueinander, wobei sich die Hohlfaser zwischen den Elektroden befindet. Der Reaktionsraum 64 ist mit der Umgebungslösung 63 gefüllt und mit einem Reservoir 66 verbunden. Mit der pH-Einstellvorrichtung 67 wird der pH-Wert der Umgebungslösung eingestellt. Wegen der Teildurchlässigkeit der Hohlfaser folgt der pH-Wert der Führungsflüssigkeit dem pH-Wert der Umgebungslösung. Zur Gewährleistung der räumlichen pH-Konstanz ist mindestens ein Rührmittel 65 vorgesehen. Am stromaufwärts gelegenen Ende der Hohlfaser 61 ist eine Pumpe 68 zur Förderung der Führungsflüssigkeit 69 vorgesehen. Die Pumpe 68 ist über eine Verbindung 610 (z. B. Verbindungsschlauch) mit dem Reaktionsraum 64 und/oder mit einem separaten Flüssigkeitsreservoir 611 verbunden. Alternativ zu der Pumpe 68 zum Führungsflüssigkeitvorschub kann auch am stromabwärts gelegenen Ende der Hohlfaser eine Saugvorrichtung vorgesehen sein, die für die erforderliche Bewegung der Führungsflüssigkeit in Strömungsrichtung sorgt.

Die Zufuhr der Probe 612 in den Führungsflüssigkeitstrom als schmale Bande erfolgt über einen Dreiwege-Einspritzblock 613, der mit einem Dosiermittel (zum Beispiel Hamilton-Spritze 614) ausgestattet ist. Es können jedoch auch Mikrokanäle in der Hohlfaserwand zur Probenzufuhr vorgesehen sein.

Am stromabwärts gelegenen Ende der Hohlfaser befindet sich eine Detektoreinheit 615 zur Identifizierung der sich nach Durchtritt durch die Hohlfaser im Lumen befindlichen Substanzen sowie ein Dreiwegehahn 616 zur kontrollierten Überführung von Flüssigkeit aus der Hohlfaser in einen Fraktionssammler 617. Die Detektoreinheit 615 kann z.B. für eine optisch-spektroskopische Messung eingerichtet sein. Besteht die Hohlfaser aus UV-durchlässigem Glas, so können Proteine mit einer Absorption im UV-Bereich direkt in der Hohlfaser detektiert werden.

Teilchen mit einem vom pH-Wert abweichenden IP werden an der Faserinnenwand fixiert. Teilchen mit einem IP entsprechend dem pH-Wert durchlaufen die Faser ungehindert. Durch Variation des pH-Wertes während der Trennung lassen sich einzelne Fraktionen trennen, die dann in Folge aus dem Faservolumen gespült werden.

Die Vorrichtung gemäß Fig. 6 ist je nach Gestaltung der Hohlfaser sowohl als Trennvorrichtung als auch als Reinigungsvorrichtung gemäß den oben erläuterten Verfahrensweisen einsetzbar. Es ist möglich, den Reaktionsraum zur Aufnahme mehrerer Umgebungslösungen zu unterteilen, die sich in ihrem pH-Wert unterscheiden. Die Elektroden werden dann entsprechend unterbrochen und getrennt ansteuerbar. Es können mehrere Vorrichtungen gemäß Fig. 6 als Kaskade angeordnet werden.

Bei der erfindungsgemäßen Gestaltung der Auffanganordnung als Hohlfaser besitzt die Führungsflüssigkeit einen Strömungsquerschnitt, der wesentlich geringer als die Länge der Trennstrecke ist. Damit können die Elektroden, zwischen denen sich die Hohlfaser befindet, mit einem geringen Abstand angeordnet werden, so daß geringe Spannungen zur Erzeugung einer hohen Feldstärke ausreichen. Übliche Trennanordnungen können beispielsweise mit einer Spannung im Bereich von 1 bis 10 V betrieben werden. Bei derart geringen Spannungen kann eine übermäßige Wärmeproduktion und die Erzeugung von Elektrolyseprodukten vermieden werden, so daß hitzeempfindliche Proben geschont werden. Im Vergleich zu der eingangs erläuterten cIFF-Technik wird die Strecke, über die ein elektrisches Feld angelegt wird, erfindungsgemäß um rd. drei Größenordnungen verringert.

Weitere Vorteile der Erfindung liegen in den geringen Analyse- oder Trennzeiten (rd. 10 Minuten oder weniger). Der Möglichkeit zur automatisierten und permanenten Detektierbarkeit im Durchflußsystem sowie der leichten Handhabbarkeit mit herkömmlichen, aufwendigen Gel- oder IPG-IEF-Techniken. Ferner lassen sich erfindungsgemäß abgetrennte Komponenten zeitweilig festhalten und nach vorbestimmter Feld- oder pH-Änderung wieder freigeben.

Eine weitere Variante der erfindungsgemäßen isoelektrischen Trennung besteht in einer Konzentrierungsprozedur. Eine verdünnte Lösung mit einer oder mehreren Komponenten wird kontinuierlich durch die Hohlfaser geströmt und dem Feldeinfluß ausgesetzt. Die nicht-isoelektrischen Komponenten werden an der Hohlfaserwand räumlich fixiert. Nach der Durchströmung wird das Feld abgeschaltet und die Hohlfaser mit einem Lösungsmittelvolumen (Spülvolumen) durchströmt, das kleiner als Gesamtvolumen der vorher verdünnten Lösung ist. Das Spülvolumen, löst die an der Wand fixierten Moleküle, die somit gleichzeitig freigegeben werden und das Faservolumen verlassen, worauf sich eine resultierende Lösung höherer Konzentration als der ursprünglichen verdünnten Lösung ergibt.

Eine weitere Anwendung besteht in der Beschleunigung von Dialyseprozessen. Besitzt die Umgebungslösung eine geringere Ionenstärke (Ionenkonzentration) als die Führungsflüssigkeit, so werden Ionen aus der Hohlfaser diffundiert. Der Vorgang kann durch das elektrische Feld stark beschleunigt werden.

Mit der dargestellten Vorrichtung läßt sich aber auch eine Substanz hinsichtlich ihrer isoelektrischen Parameter charakterisieren. Dies ist insbesondere bei der Charakterisierung von Isoenzymen von Interesse.

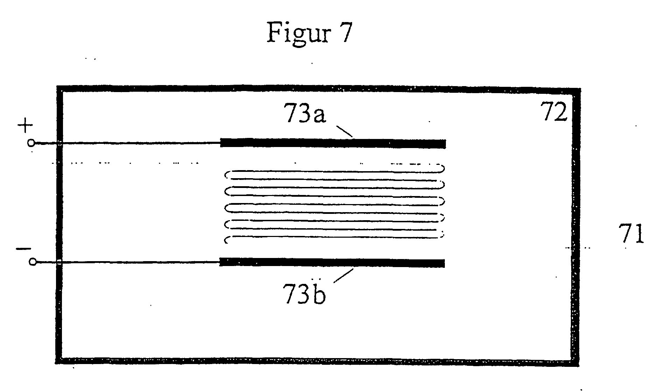

Im folgenden werden Modifizierungen der Vorrichtung gemäß Fig. 6 unter Bezug auf die Fign. 7 bis 12 erläutert.

Die Fig. 7 zeigt ein Ausführungsbeispiel, bei dem im Reaktionsraum 72 eine gekrümmte Hohlfaser 71 angeordnet ist. Die Hohlfaser besitzt eine spiralförmige Geometrie. Die Elektroden 73a, 73b sind an die Geometrie der Hohlfaser angepaßt. Beim dargestellten Beispiel sind die Elektroden 73 Ringelektroden, mit denen der Spiralquerschnitt gerade abgedeckt wird. Die spiralförmige Fasergestaltung erlaubt es, größere Probenmengen simultan zu trennen, da eine größere Probenmenge im Wandbereich, in dem die Strömungsgeschwindigkeit null ist, (s. Fig. 1) festgehalten werden kann. Im mikropräparativen Maßstab ist hierdurch auch eine kontinuierliche Probenzufuhr möglich.

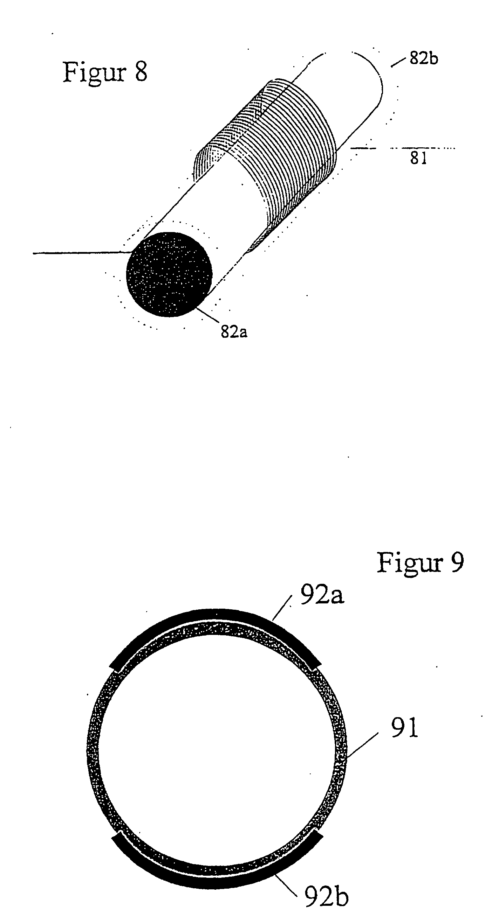

Fig. 8 zeigt ebenfalls eine spiralförmig gestaltete Hohlfaser 81, die auf eine zylindrisch geformte Elektrode 82a aufgewickelt ist. Die Gegenelektrode 82b (gepunktet dargestellt) kann z. B. als Hohlzylinder über die Anordnung geschoben werden. Der zwischen den Elektroden verbleibende Spalt kann von der Umgebungslösung durchströmt werden. Die Anordnung gemäß Fig. 8 ist durch hohe Lade- oder Trennkapazitäten bei gleichzeitig geringem Platzbedarf und niedrigen Spannungen gekennzeichnet.

Die bisher als separate Bauteile beschriebenen Elektroden- und Auffangmittel können gemäß Fig. 9 auch miteinander verbunden werden. Fig. 9 zeigt den Querschnitt einer Hohlfaser 91 mit Elektroden 92a, 92b, die als dünne Schicht auf die Hohlfaseraußenwand aufgebracht worden sind. Damit lassen sich noch geringere Spannungen zum Erzielen hoher Feldstärken einstellen. Die Umgebungslösung beeinflußt das Hohlfaserinnere durch die frei gebliebenen Bereiche der Hohlfaser. Es ist jedoch auch möglich, das erfindungsgemäße System ohne die Umgebungslösung zu betreiben.

Fig. 10 zeigt die Kombination einer Trennvorrichtung (Reaktionsraum 101 mit Hohlfaser und Elektroden 102a, 102b) mit einer Aufkonzentrierungsvorrichtung 104. Diese kombinierte Anordnung wird derart betrieben, daß zunächst im Trennbereich eine erfindungsgemäße Fraktionierung eines Substanzgemisches erfolgt. In der Aufkonzentrierungsvorrichtung 104, deren Umgebungslösung 105 einen anderen pH-Wert als die Umgebungslösung 103 im Trennbereich besitzt, kann die gereinigte Fraktion mit den Elektroden 106a, 106b als schmale Bande fixiert und nach Abschalten des elektrischen Feldes an diesen Elektroden als konzentrierte Fraktion dem Fraktionssammler 107 zugeführt werden.

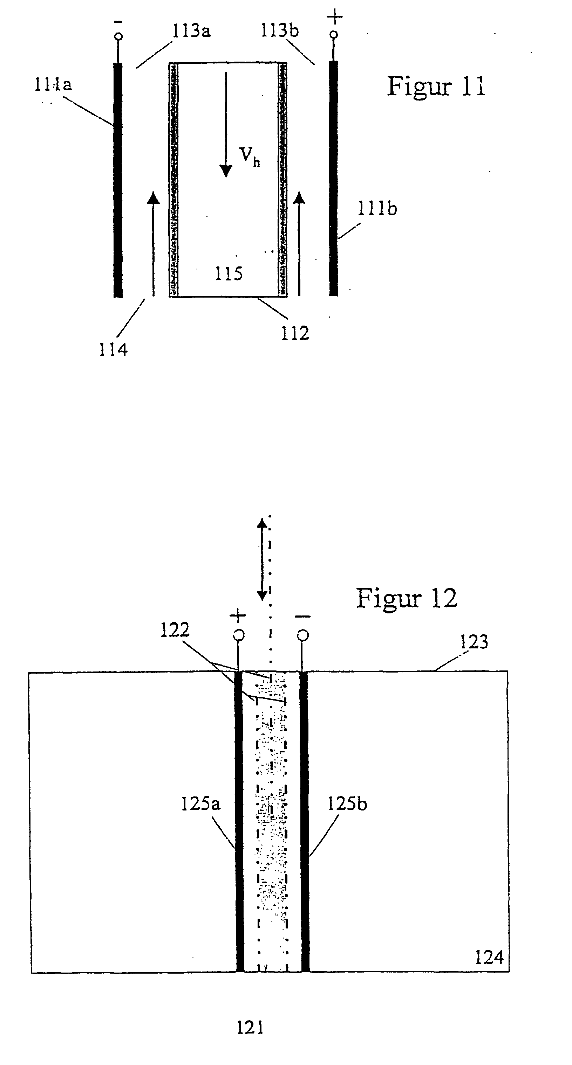

Das Multikompartimentsystem gemäß Fig. 11 realisiert ein Gegenstromprinzip, bei dem die Umgebungslösung 114 im jeweiligen Reaktionsraum in eine Strömungsbewegung versetzt wird. Die Strömungsrichtung ist vorzugsweise der Strömungsrichtung in der Hohlfaser 112 entgegengesetzt. Um eventuell an den Elektroden 111a, 111b auftretende Elektrolyseprodukte aufzufangen, wird zwischen den Elektroden und der Hohlfaser 112 eine Membran 113a, 113b angebracht. Die Strömung der Umgebungslösung dient auch der pH-Stabilisierung im Reaktionsraum.

Erfindungsgemäß ist es nicht unbedingt erforderlich, daß die Führungsflüssigkeit eine Strömung aufweist. Die Führungsflüssigkeit kann auch ruhen. Es ist auch möglich, das Auffangmittel relativ zur Führungsflüssigkeit zu bewegen. Dies wird in Fig. 12 illustriert. Eine Kammer 123 ist mit einem Proteingemisch 121 gefüllt und wird durch stromdurchlässige Membranen 122 begrenzt. Die Kammer 123 wird in den pH-regulierten Bereich.124 gebracht. Unter Anlegung des elektrischen Feldes über die Elektroden 125a, 125b wandern einzelne Proteine nach dem erfindungsgemäßen Prinzip zu den Membranen 122. Die Membranen können mit beweglichen, proteinbindenden Zwischenmembranen versehen sein, die nach Belegung mit den getrennten Proteinen in Pfeilrichtung abgezogen werden. Es ist alternativ auch möglich, einen Elutionsstrom in Pfeilrichtung vorzusehen, um die getrennten Proteine aus dem Membranbereich zu spülen.

Erfindungsgemäß kann eine Trennvorrichtung auch mit mehreren, kaskadenartig angeordneten Auffangmitteln oder mehreren hintereinander oder parallel angeordneten Trennbereichen ausgerüstet sein. Die Auffangmittel können statt durch die beschriebene Hohlfaser auch durch beliebige poröse Membranen oder Lamellen gebildet werden, die entsprechende Kompartimente zur Aufnahme der Führungsflüssigkeit bilden, neben denen die Elektrodenmittel plaziert sind.

Die Teildurchlässigkeit des Auffangmittels (z. B. der Hohlfaser) kann über die Länge in Durchströmungsrichtung variieren, so daß abschnittsweise bestimmte Ionen der Führungsflüssigkeit und/oder Umgebungslösung und/oder nur bestimmte Moleküle durchgelassen werden.

Es ist ferner möglich, die Innenwandung der Hohlfaser durch chemische oder physikalische Methoden zu modifizieren, um die Wirkung des elektrischen Feldes zu verändern. Es ist möglich, die Hohlfaser innen mit Gelen, Mikropartikelsuspensionen oder Granulaten zu füllen oder auch im Reaktionsraum ein Gel vorzusehen. Es ist möglich, die Hohlfaser in einem bestimmten Abstand um eine beliebig geformte Elektrode zu wickeln und die Gegenelektrode an diese Geometrie anzupassen.

Die Auffangmittel können durch ein mehrfaseriges Array gebildet werden, das aus einer Vielzahl von Hohlfasern besteht, die sämtlich mit der Führungsflüssigkeit durchströmt werden. Die Durchströmung erfolgt jedoch in den Fasern verschieden schnell, so daß substanzabhängig die Trenneffektivität beeinflußt werden kann.

Die mindestens zwei Elektroden können mit einer Gleichspannung oder Wechselspannung oder mit einem anderen, frei programmierbaren Spannungsverlauf beaufschlagt werden, so daß die Feldstärke in der Führungsflüssigkeit entsprechend variiert wird. Dies erlaubt die Bildung vorbestimmter Trennmuster auf den Auffangmitteln.

Die Elektroden können zur Reduzierung ggf. auftretender elektrolytischer Reaktionen wie folgt modifizierte Oberflächen bzw. Materialien aufweisen. Die Elektroden können porös ausgeführt sein oder Beschichtungen (z. B. Gele, Spacer) tragen.

Die Auffangmittel können durch flächige Membranen umgrenzt werden, die ein Kompartiment für die Führungsflüssigkeit bilden. Das Kompartiment kann mit Hilfe weiterer Membranen unterteilt sein, die jeweils für die Aufnahme verschiedener Proteinfraktionen vorgesehen sind. Bei einer derartigen Anordnung kann die Zufuhr der zu trennenden Probe durch Einführung einer Membran realisiert werden, auf der die Probe adsorbiert ist.

Ein besonderer Vorteil der erfindungsgemäßen Trennvorrichtung besteht in ihrer Miniaturisierbarkeit. Es ist daher gemäß einer bevorzugten Ausführungsform vorgesehen, mindestens Teile der Elektroden durch elektronische Bauelemente wie Transistoren oder Dioden zu bilden und anzusteuern und die dreidimensionale Anordnung der Elektroden, Kanäle, Hohlfaserhalterungen und des Reaktionsraumes mit den Technologien der Halbleiterstrukturierung herzustellen.

## Patentansprüche

1. Verfahren zur isoelektrischen Teilchentrennung, bei dem Teilchen mit einer Nettoladung oder Ladungsdichte, die vom pH-Wert der Umgebung abhängig ist, in einer Führungsflüssigkeit elektrischen Feldkräften ausgesetzt werden, wobei der pH-Wert der Führungsflüssigkeit derart eingestellt wird, daß mindestens eine vorbestimmte Teilchenart unter Wirkung der elektrischen Feldkräfte eine ladungsabhängige Bewegungsänderung erfährt,
**dadurch gekennzeichnet, daß**
die die Bewegungsänderung erfahrende Teilchenart durch die elektrischen Feldkräfte zu Auffangmitteln (11, 61, 71, 81, 91) bewegt wird, die an die Führungsflüssigkeit angrenzen und für eine lösbare Fixierung der geladenen Teilchen eingerichtet sind.

2. Verfahren gemäß Anspruch 1, bei dem die bewegte Teilchenart Teilchen umfaßt, deren isoelektrischer Punkt nicht mit dem pH-Wert der Führungsflüssigkeit übereinstimmt.

3. Verfahren gemäß Anspruch 1 oder 2, bei dem die Führungsflüssigkeit und die Auffangmittel relativ zueinander bewegt werden.

4. Verfahren gemäß Anspruch 3, bei dem die Auffangmittel mindestens eine poröse Wand umfassen, an der die Führungsflüssigkeit mit den zu trennenden Teilchen vorbeiströmt.

5. Verfahren gemäß Anspruch 4, bei dem die elektrischen Feldkräfte durch Elektrodenmittel erzeugt werden, die sich mindestens teilweise entlang der Strömungsrichtung über die Länge der porösen Wand erstrecken, wobei während des Strömens der Führungsflüssigkeit mit den zu trennenden Teilchen durch die poröse Wand die Strömungsgeschwindigkeit, der pH-Wert und/oder die elektrischen Felder der Elektrodenmittel variiert werden.

6. Verfahren gemäß einem der vorhergehenden Ansprüche, bei dem der Führungsflüssigkeit als zu trennende Teilchen ampholytische Moleküle oder andere Teilchen, synthetische Partikel oder biologische Zellen, Viren oder andere biologische Objekte zugeführt werden, deren elektrische Eigenschaften den elektrischen Eigenschaften ampholytischer Moleküle entsprechen.

7. Verfahren gemäß einem der Ansprüche 2 bis 6, bei dem zur Reinigung der Führungsflüssigkeit Teilchen, die aus der Führungsflüssigkeit entfernt werden sollen, durch die Auffangmittel aus der Führungsflüssigkeit bewegt werden.

8. Verfahren gemäß einem der Ansprüche 4 bis 7, bei dem die Strömungsgeschwindigkeit der Führungsflüssigkeit zumindest zeitweise verringert oder auf null abgesenkt wird, wenn die zu trennenden Teilchen den elektrischen Feldkräften ausgesetzt sind.

9. Verfahren gemäß einem der Ansprüche 4 bis 8, bei dem eine Probe mit den zu trennenden Teilchen und/oder die Führungsflüssigkeit über Mikrokanäle in der porösen Wand zugeführt werden.

10. Verfahren gemäß einem der vorhergehenden Ansprüche, bei dem der pH-Wert einer Probenlösung, mit der die Teilchen der Führungsflüssigkeit zugeführt werden, der Führungsflüssigkeit und/oder der Umgebungslösung unabhängig eingestellt werden, so daß sich am Auffangmittel vorbestimmte pH-Gradienten bilden.

11. Verfahren gemäß einem der Ansprüche 1 bis 9, bei dem der pH-Wert einer Probenlösung, in der die zu trennenden Teilchen der Führungsflüssigkeit zugeführt werden, und/oder der Führungsflüssigkeit durch diffusive Austauschprozesse mit der Umgebungslösung eingestellt wird.

12. Vorrichtung zur isoelektrischen Teilchentrennung, die enthält:
- Elektrodenmittel (12a, b, 62a, b, 73a, b, 82a, b, 92a, b, 102a, b, 111a, b, 125a, b) zur Bildung eines elektrischen Feldes in einer Führungsflüssigkeit mit Teilchen, deren elektrische Nettoladung oder Ladungsdichte vom pH-Wert der Führungsflüssigkeit abhängt,
**gekennzeichnet durch**
- eine pH-Einstelleinrichtung (67), die dazu vorgesehen ist, den pH-Wert der Führungsflüssigkeit derart einzustellen, daß mindestens eine vorbestimmte Teilchenart von den Teilchen in der Führungsflüssigkeit unter Wirkung des elektrischen Feldes eine ladungsabhängige Bewegungsänderung erfährt, und
- Auffangmittel (11, 61, 71, 81, 91), die zwischen den Elektrodenmitteln und der Führungsflüssigkeit mit den Teilchen angeordnet und zur lösbaren Fixierung geladener Teilchen eingerichtet sind.

13. Vorrichtung gemäß Anspruch 12, bei der die Auffangmittel mindestens ein Kompartiment zur Aufnahme der Führungsflüssigkeit oder zur Führung einer Führungsflüssigkeitsströmung bilden.

14. Vorrichtung gemäß einem der Ansprüche 12 oder 13, bei der die Auffangmittel eine teildurchlässige oder poröse Wandung besitzen.

15. Vorrichtung gemäß einem der Ansprüche 12 bis 14, bei der die Auffangmittel durch mindestens eine Hohlfaser mit poröser Wandung und/oder poröse Membranen oder Lamellen gebildet werden.

16. Vorrichtung gemäß einem der Ansprüche 12 bis 15, bei der die Auffangmittel mit den Elektrodenmitteln in einem Reaktionsraum (64, 72, 101) angebracht sind, der eine Umgebungslösung enthält, deren pH-Wert mit den pH-Einstellmitteln einstellbar ist .

17. Vorrichtung gemäß einem der Ansprüche 14 bis 16, bei der die Durchlässigkeit der Wandung durch Variation der Größe und/oder der Form der Poren in der Wandung entlang eines von der Führungsflüssigkeit durchströmten Bereiches derart verändert ist, daß die Wandung mindestens abschnittsweise nur für vorbestimmte Ionen der Führungsflüssigkeit und Umgebungslösung und/oder für mindestens eine Teilchenart der zu trennenden Teilchen durchlässig ist.

18. Vorrichtung gemäß einem der Ansprüche 12 bis 17, bei der die Auffangmittel auf der zur Führungsflüssigkeit gewandten Seite eine Modifizierungsschicht aufweisen, die zum Anhaften oder zur Aufnahme der abzutrennenden Teilchen eingerichtet ist.

19. Vorrichtung gemäß Anspruch 18, bei der die Modifizierungsschicht durch Gele, Mikropartikelsuspexisionen und/oder Granulate gebildet wird.

20. Vorrichtung gemäß einem der Ansprüche 12 bis 19, bei der die Elektrodenmittel eine Vielzahl von Elektroden umfassen, die auf der der Führungsflüssigkeit abgewandten Seite entlang der Strömungsrichtung der Führungsflüssigkeit an den Auffangmitteln angeordnet sind.

21. Vorrichtung gemäß Anspruch 20, bei der eine Steuereinrichtung vorgesehen ist, mit der die Elektroden selektiv derart ansteuerbar sind, daß ein zeitlich und räumlich veränderliches Spannungsgefälle ausgebildet wird.

22. Vorrichtung gemäß Anspruch 20, bei der die Auffangmittel durch eine Hohlfaser (81) gebildet werden, die in vorbestimmtem Abstand um mindestens eine der Elektroden 82a, 82b wie eine Umwicklung gelegt ist.

23. Vorrichtung gemäß Anspruch 20, bei der die Elektroden auf der von der Führungsflüssigkeit abgewandten Oberfläche der Auffangmittel befestigt sind und die Oberfläche zumindest teilweise bedecken.

24. Vorrichtung gemäß einem der Ansprüche 20 bis 23, bei der eine Mehrzahl von Trennräumen, die jeweils die Elektrodenmittel, die Auffangmittel und Kompartimente zur Führung der Führungsflüssigkeit enthalten, kaskadenartig, seriell oder parallel verbunden ist.

25. Verwendung einer Vorrichtung gemäß einem der Ansprüche 12 bis 24 für:
- die Trennung mindestens einer Teilchenart aus der Führungsflüssigkeit zur Gewinnung einer gereinigten Fraktion der abgetrennten Teilchen und/oder einer gereinigten Führungsflüssigkeit,
- die Ermittlung elektrischer und thermodynamischer Eigenschaften von Substanzen, wie die Ermittlung des isoelektrischen Punkts, von Titrationskurven oder des Aggregationsverhaltens,
- die Aufkonzentrierung einer Teilchenlösung oder -suspension, oder
- die Verringerung der Ionenstärke der Führungsflüssigkeit.

## Claims

1. Method for isoelectric particle separation, in which particles having a net charge or charge density which is dependent upon the pH value of the environment are exposed to electrical field forces in a conduction liquid, the pH value of the conduction liquid being adjusted in such a manner that at least one predetermined type of particle experiences a charge-dependent change of movement under the effect of the electrical field forces,
**characterised in that**
the type of particle which experiences the change of movement by means of the electrical field forces is moved towards collecting means (11, 61, 71, 81, 91) which adjoin the conduction liquid and are provided for a detachable fixation of the charged particles.

2. Method according to claim 1, in which the moved type of particle comprises particles, the isoelectric point of which does not match the pH value of the conduction liquid.

3. Method according to claim 1 or 2, in which the conduction liquid and the collecting means are moved relative to each other.

4. Method according to claim 3, in which the collecting means comprise at least one porous wall, on which the conduction liquid with the particles to be separated flows past.

5. Method according to claim 4, in which the electrical field forces are produced by electrode means which extend at least partially along the flow direction over the length of the porous wall, the flow velocity, the pH value and/or the electrical fields of the electrode means being varied during the flow of the conduction liquid with the particles to be separated through the porous wall.

6. Method according to one of the preceding claims, in which ampholytic molecules or other particles, synthetic particles or biological cells, viruses or other biological objects, the electrical properties of which correspond to the electrical properties of ampholytic molecules, are supplied to the conduction liquid as particles to be separated.

7. Method according to one of the claims 2 to 6, in which, in order to purify the conduction liquid, particles which are intended to be removed from the conduction liquid are moved out of the conduction liquid by the collecting means.

8. Method according to one of the claims 4 to 7, in which the flow velocity of the conduction liquid is at least at times reduced or dropped to zero when the particles to be separated are exposed to the electrical field forces.

9. Method according to one of the claims 4 to 8, in which a sample with the particles to be separated and/or the conduction liquid is supplied via microchannels in the porous wall.

10. Method according to one of the preceding claims, in which the pH value of a sample solution, with which the particles of the conduction liquid are supplied, of the conduction liquid and/or of the surrounding solution are adjusted independently, so that predetermined pH gradients form at the collecting means.

11. Method according to one of the claims 1 to 9, in which the pH value of a sample solution, in which the particles of the conduction liquid which are to be separated are supplied, and/or of the conduction liquid is adjusted by means of diffusive exchange processes with the surrounding solution.

12. Device for isoelectric particle separation which contains:
- electrode means (12a, b, 62a, b, 73a, b, 82a, b, 92a, b, 102a, b, 111a, b, 125a, b) in order to form an electrical field in a conduction liquid with particles, the electrical net charge or charge density of which is dependent upon the pH value of the conduction liquid,
**characterised by**
- a pH adjustment device (67), which is provided in order to adjust the pH value of the conduction liquid in such a manner that at least one predetermined type of particle of the particles in the conduction liquid experiences a charge-dependent change of movement under the effect of the electrical field, and
- collecting means (11, 61, 71, 81, 91) which are disposed between the electrode means and the conduction liquid with the particles and are provided for detachable fixation of charged particles.

13. Device according to claim 12, in which the collecting means form at least one compartment for receiving the conduction liquid or for guiding a conduction liquid flow.

14. Device according to one of the claims 12 or 13, in which the collecting means have a partially permeable or porous wall.

15. Device according to one of the claims 12 to 14, in which the collecting means are formed by at least one hollow fibre with a porous wall and/or porous membranes or lamellae.

16. Device according to one of the claims 12 to 15, in which the collecting means are installed with the electrode means in a reaction chamber (64, 72, 101) which contains a surrounding solution, the pH value of which can be adjusted with the pH adjustment means.

17. Device according to one of the claims 14 to 16, in which the permeability of the wall is changed in such a manner, by means of variation of the size and/or of the shape of the pores in the wall along a region through which the conduction liquid flows, that the wall is permeable at least in portions only for predetermined ions of the conduction liquid and surrounding solution and/or for at least one type of particle of the particles to be separated.

18. Device according to one of the claims 12 to 17, in which the collecting means have a modification layer on the side which is orientated towards the conduction liquid, which layer is provided for the adhesion or receiving of the particles to be separated.

19. Device according to claim 18, in which the modification layer is formed by gels, microparticle suspensions and/or granulates.

20. Device according to one of the claims 12 to 19, in which the electrode means comprise a multiplicity of electrodes, which are disposed on the side which is orientated away from the conduction liquid along the flow direction of the conduction liquid at the collecting means.

21. Device according to claim 20, in which a control device is provided, with which the electrodes can be selectively controlled in such a manner that a temporally and spatially variable potential difference is formed.

22. Device according to claim 20, in which the collecting means are formed by a hollow fibre (81), which is laid at a predetermined spacing around at least one of the electrodes (82a, 82b) like a winding.

23. Device according to claim 20, in which the electrodes are fixed on the surface of the collecting means, which is orientated away from the conduction liquid, and cover the surface at least partially.

24. Device according to one of the claims 20 to 23, in which a plurality of separating chambers, which respectively contain the electrode means, the collecting means and compartments for guiding the conduction liquid, is connected in cascade fashion, in series or in parallel.

25. Use of a device according to one of the claims 12 to 24 for:
- the separation of at least one type of particle from the conduction liquid in order to obtain a purified fraction of the separated particles and/or a purified conduction liquid,
- the detection of electrical and thermodynamic properties of substances, such as the detection of the isoelectric point, of titration curves or of the aggregation behaviour,
- the concentration of a particle solution or -suspension, or
- the reduction of the ionic strength of the conduction liquid.

## Revendications

1. Procédé pour la séparation isoélectrique de particules, avec lequel des particules avec une charge nette ou une densité de charge qui dépend de la valeur du pH du milieu sont exposées à des forces électriques de champ dans un liquide de conduction, le pH du liquide de conduction étant ajusté de telle manière qu'au moins un genre prédéfini de particules est soumis à une modification de mouvement dépendant de la charge sous l'effet des forces électriques de champs, **caractérisé en ce que** le genre de particules soumis à la modification du mouvement est déplacé par les forces électriques de champs vers des éléments de réception (11, 61, 71, 81, 91), qui sont contigus au liquide de conduction et qui sont aménagés pour un fixage amovible des particules chargées.

2. Procédé selon la revendication 1, **caractérise en ce que** le genre de particules mis en mouvement comprend des particules dont le point isoélectrique ne correspond pas à la valeur du pH du liquide de conduction.

3. Procédé selon la revendication 1 ou 2, **caractérisé en ce que** le liquide de conduction et les éléments de réception sont déplacés l'un par rapport à l'autre.

4. Procédé selon la revendication 3, **caractérisé en ce que** les éléments de réception comprennent au moins une paroi poreuse, le long de laquelle s'écoule le liquide de conduction comprenant les particules à séparer.

5. Procédé selon la revendication 4, **caractérisé en ce que** les forces électriques de champs sont produites par des éléments d'électrodes, qui s'étendent au moins partiellement le long de la direction d'écoulement sur la longueur de la paroi poreuse, la vitesse d'écoulement, le pH et/ou les champs électriques des éléments d'électrodes étant variés lors de l'écoulement à travers la paroi poreuse du liquide de conduction comprenant les particules à séparer.

6. Procédé selon l'une des revendications précédentes, **caractérisé en ce que** des molécules ampholytiques ou d'autres particules, des particules synthétiques ou des cellules biologiques, des virus ou d'autres éléments biologiques, dont les caractéristiques électriques correspondent aux caractéristiques électriques de molécules ampholytiques, sont introduits comme particules à séparer dans le liquide de conduction.

7. Procédé selon l'une des revendications 2 à 6, **caractérisé en ce que**, pour le nettoyage du liquide de conduction, des particules qui doivent être éliminées du liquide de conduction sont déplacées par les éléments de réception hors du liquide de conduction.

8. Procédé selon l'une des revendications 4 à 7, **caractérisé en ce que** la vitesse d'écoulement du liquide de conduction est, au moins par moments, réduite ou abaissée à zéro lorsque les particules à séparer sont soumises aux forces électriques de champs.

9. Procédé selon l'une des revendications 4 à 8, **caractérisé en ce qu'**un échantillon comprenant les particules à séparer et/ou le liquide de conduction sont amenés par l'intermédiaire de microcanaux se trouvant dans la paroi poreuse.

10. Procédé selon l'une des revendications précédentes, **caractérisé en ce que** le pH d'une solution d'échantillon, avec laquelle les particules sont amenées au liquide de conduction, du liquide de conduction et/ou de la solution ambiante est réglé de manière indépendante, des gradients de pH prédéterminés se formant sur l'élément de réception.

11. Procédé selon l'une des revendications 1 à 9, **caractérisé en ce que** le pH d'une solution d'échantillon, dans laquelle les particules à séparer sont amenées au liquide de conduction, et/ou du liquide de conduction est réglé par des processus diffusants d'échange avec la solution ambiante.

12. Dispositif pour la séparation isoélectrique de particules comprenant :
- des éléments d'éléctrodes (12 a, b, 62 a, b, 73 a, b, 82 a, b, 92 a, b, 102 a, b, 111 a, b, 125 a, b) pour la formation d'un champ électrique dans un liquide de conduction avec des particules, dont la charge nette électrique ou la dénsité de charge dépend du pH du liquide introduit, **caractérisé**
- **en ce qu'**il existe un dispositif d'ajustement du pH (67), qui est prévu pour régler de telle manière le pH du liquide de conduction qu'au moins un genre prédéfini de particules parmi les particules se trouvant dans le liquide de conduction est soumis à une modification de mouvement dépendant de la charge sous l'effet du champ électrique et
- **en ce qu'**il existe des éléments de réception (11, 61, 71, 81, 91), qui sont disposés entre les éléments d'électrodes et le liquide de conduction contenant les particules et qui sont aménagés pour un fixage amovible de particules chargées.

13. Dispositif selon la revendication 12, **caractérisé en ce que** les éléments de réception forment au moins un compartiment pour la réception du liquide de conduction ou pour la conduite d'un écoulement du liquide de conduction.

14. Dispositif selon l'une des revendications 12 ou 13, **caractérise en ce que** les éléments de réception comprennent une paroi partiellement perméable ou poreuse.

15. Dispositif selon l'une des revendications 12 à 14, **caractérisé en ce que** les éléments de réception sont formés par au moins une fibre creuse avec une paroi poreuse et/ou des membranes ou lamelles poreuses.

16. Dispositif selon l'une des revendications 12 à 15, **caractérisé en ce que** les éléments de réception sont disposés avec les éléments d'électrodes dans un compartiment de réaction (64, 72, 101), qui contient une solution ambiante, dont le pH peut être réglé à l'aide des éléments d'ajustement du pH.

17. Dispositif selon l'une des revendications 14 à 16, **caractérisé en ce que** la perméabilité de la paroi peut être réglée de telle manière par une variation de la taille et/ou de la forme des pores dans la paroi le long d'une zone traversée par le liquide de conduction que la paroi ne soit, au moins par sections, perméable que pour des ions prédétermines du liquide de conduction et de la solution ambiante et/ou pour au moins un genre de particules parmi les particules à séparer.

18. Dispositif selon l'une des revendications 12 à 17, **caractérisé en ce que**, sur le côté dirigé vers le liquide de conduction, les éléments de réception comprennent une couche de modification, qui est équipée pour permettre l'adhérence ou l'absorption des particules à séparer.

19. Dispositif selon la revendication 18, **caractérisé en ce que** la couche de modification est formée par des gels, des suspensions de microparticules et/ou des granulats.

20. Dispositif selon l'une des revendications 12 à 19, **caractérisé en ce que** les éléments d'électrodes comprennent une pluralité d'électrodes qui, sur le côté opposé au liquide de conduction le long de la direction d'écoulement du liquide de conduction, sont disposées sur les éléments de réception.

21. Dispositif selon la revendication 20, **caractérisé en ce qu'**il est prévu un dispositif de commande, à l'aide duquel les électrodes peuvent être commandées de manière sélective et de façon à obtenir une pente de baisse de tension variable dans le temps et dans l'espace.

22. Dispositif selon la revendication 20, **caractérisé en ce que** les éléments de réception sont. formés par une fibre creuse (81), qui est placée avec un espacement prédéterminé comme un enroulement autour d'au moins une des électrodes (82a, 82b).

23. Dispositif selon la revendication 20, **caractérisé en ce que** les électrodes sont fixées sur la surface des éléments de réception opposée au liquide de conduction et recouvrent au moins partiellement la surface.

24. Dispositif selon l'une des revendications 20 à 23, **caractérisé en ce qu'**une pluralité de compartiments de séparation, qui comprennent respectivement les éléments d'électrodes, les éléments de réception et des compartiments pour la conduite du liquide de conduction, sont reliés en cascade, en série ou en parallèle.

25. Utilisation d'un dispositif selon l'une des revendications 12 à 24, pour :
- la séparation d'au moins un genre de particules à partir du liquide de conduction pour obtenir une fraction purifiée des particules séparées et/ou un liquide de conduction purifié,
- la détermination de caractéristiques électriques et thermodynamiques de substances, comme la détermination du point isoélectrique, de courbes de titration ou du comportement d'agrégation,
- l'augmentation de la concentration d'une solution ou d'une suspension de particules ou
- la réduction de la force ionique du liquide de conduction.
